# EUROPEAN PATENT APPLICATION

(11) **EP 4 583 220 A1**
(43) Date of publication of application: **09.07.2025**
(21) Application number: 24220843.7
(22) Date of filing: 18.12.2024
(51) Int. Cl.: H01M 10/04, H01M 50/107, H01M 50/213, H01M 50/533

(54) **BATTERY, BATTERY MODULE AND BATTERY PACK**

(30) Priority: 18.12.2023 CN 202311750665; 18.12.2023 CN 202323459079 U; 31.07.2024 WO PCT/CN2024/108930
(71) Applicant: Eve Energy Co., Ltd., Huizhou, Guangdong 516006 (CN)
(72) Inventor: LI, Jidong, Huizhou, Guangdong, 516006 (CN); FU, Zhibo, Huizhou, Guangdong, 516006 (CN); WANG, Xingjian, Huizhou, Guangdong, 516006 (CN); SONG, Pengyuan, Huizhou, Guangdong, 516006 (CN)
(74) Representative: Berggren Oy

(57) **Abstract**

A battery, a battery module, and a battery pack are provided in the present application. The battery includes a case, a current collector plate, and multiple first welding portions. The case includes a top and a bottom, and a cavity is formed in the case. The current collector plate is arranged in the cavity. Multiple first welding portions are formed on a side, close to the bottom, of the current collector plate. The current collector plate is welded to the bottom through multiple first welding portions. Multiple first welding portions are arranged around a center of the current collector plate. A distance between each of first welding portions and the center of the current collector plate is greater than a distance between the first welding portion to an edge of the current collector plate.

## Description

### TECHNICAL FIELD

The present application relates to the technical field of batteries, and in particular, to a battery, a battery module, and a battery pack.

### BACKGROUND

In a battery lead out structure in which a battery case is used as one electrode of a battery, a current collector plate is usually used as a conductive medium to lead current from one electrode of a battery cell to the battery case, so that the case is charged and served as one electrode of the battery. The specific method is to weld one side of the current collector plate to the battery cell and to weld another side of the current collector plate to a bottom of the case. In the prior art, the current collector plate is welded to the case in such a way that a welding position between the current collector plate to the bottom of the case is arranged at a middle portion of the current collector plate.

### SUMMARY

However, the consequence of using this welding method is as follows: the torsion resistance of a welded body, formed by welding the battery cell to the current collector plate, and the bottom of the case is insufficient, and in subsequent assembly, it is easy for the welded body and the steel case to twist due to external forces, resulting in the fracture of welding spots between the current collector plate and the case, leading to poor welding.

According to a first aspect, the present application provides a battery. The battery includes:
a case including a top and a bottom, a cavity being formed in the case;
a current collector plate arranged in the cavity; and
multiple first welding portions formed on a side, close to the bottom, of the current collector plate, wherein the current collector plate is welded to the bottom through the multiple first welding portions, the multiple first welding portions are arranged around a center of the current collector plate, and a distance between each of the first welding portions and the center of the current collector plate is greater than a distance between the first welding portion and an edge of the current collector plate.

According to a second aspect, the present application further provides a battery module. The battery module includes:
multiple batteries, each of the multiple batteries including a case, a current collector plate, and multiple first welding portions, a cavity being formed in the case; the current collector plate being arranged in the cavity; multiple first welding portions being formed on a side, close to the bottom of the case, of the current collector plate, wherein the current collector plate is welded to the bottom of the case through the multiple first welding portions, the multiple first welding portions are arranged around a center of the current collector plate, and a distance between each of the first welding portions and the center of the current collector plate is greater than a distance between the first welding portion and a edge of the current collector plate; and
a connecting piece, multiple connecting portions being formed on the connecting piece, wherein each of the multiple connecting portions is connected to a corresponding one of the batteries.

According to a third aspect, the present application further provides a battery pack. The battery pack includes:
a box; and
a battery module, wherein the battery module is arranged in the box.

In the technical solutions of the present application, a current collector plate is welded to a case through multiple first welding portions, so that a welding contact area between the current collector plate and the case is increased, and the connection stability between the current collector plate and the case is enhanced, thereby the torsion resistance is improved. Meanwhile, a large welding area can meet fast charging and overcurrent requirements of the battery, thereby the performance of the battery is improved. From the relationship between the distance and the torque, it can be seen that if the first welding portions are arranged close to the edge of the current collector plate, the welding force applied to the first welding portions will be decreased. A distance between each of the first welding portions and the center of the current collector plate is larger than a distance between the first welding portion and the edge of the current collector plate, so that the welding force applied to the first welding portions is reduced, thereby the welding difficulty is reduced, and the welding strength is increased. Meanwhile, the torsion resistance of the current collector plate and the bottom of the case is increased, the detachment of the current collector plate from the case is avoided, and the safety coefficient of the battery is increased.

### BRIEF DESCRIPTION OF THE DRAWINGS

FIG. 1 is a schematic diagram of a structure of a battery according to some embodiments of the present application;
FIG. 2 is a partial cross-sectional view of the battery in FIG. 1;
FIG. 3 is a schematic diagram of a structure of a current collector plate in FIG. 1 from a first perspective;
FIG. 4 is an enlarged schematic view of part A in FIG. 2;
FIG. 5 is a bottom perspective view of the battery in FIG. 1;
FIG. 6 is a cross-sectional view of a current collector plate in FIG. 1;
FIG. 7 is a schematic diagram of a structure of a battery module according to some embodiments of the present application.

### Reference numerals in the drawings:

100, battery; 101, case; 102, cavity; 103, bottom; 104, first side surface; 105, second side surface; 106, current collector plate; 107, third side surface; 108, fourth side surface; 109, first welding portion; 110, first side edge; 111, second side edge; 112, housing; 113, extension portion; 114, body; 115, outer layer; 116, second welding portion; 117, first connection section; 118, annular boss; 119, second connection section; 1000, battery module; 200, connection piece; 201, connection portion; 120, third welding portion; 122, core; 123, solder accommodation portion.

### DETAILED DESCRIPTION

In the prior art, a current collector plate is welded to a case in such a way that a welding portion between the current collector plate to a bottom of the case is arranged at a middle portion of the current collector plate. The consequence of using his welding method is as follows: the torsion resistance of a welded body, formed by welding a battery cell to the current collector plate, and the bottom of the case is insufficient, and in subsequent assembly, it is easy for the welded body and a steel case to twist due to external forces, resulting in the fracture of welding spots between the current collector plate and the case, leading to poor welding.

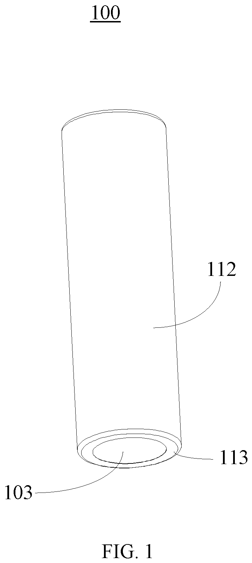

In view of this, a battery is provided in this application. FIG. 1 to FIG. 6 are schematic structural diagrams of the battery according to an embodiment of the present application. The battery provided in the present application is stable in structure, strong in torsion resistance, and high in safety coefficient. The battery will be described in detail below in connection with the accompanying drawings.

Referring to FIG. 1, FIG. 2, and FIG. 3, a battery 100 includes a case 101 in which a cavity 102 is formed, a current collector plate 106, and multiple first welding portions 109. The current collector plate 106 is arranged in the cavity 102. Multiple first welding portions 109 are formed on a side, close to a bottom 103 of the case 101, of the current collector plate 106. The current collector plate 106 is welded to the bottom 103 of the case 101 through multiple first welding portions 109. The multiple first welding portions 109 are arranged around a center of the current collector plate 106. The distance between each of the first welding portions 109 and the center of the current collector plate 106 is larger than the distance between the first welding portions 109 and the edge of the current collector plate 106.

In the technical solutions of the present application, the current collector plate 106 is welded to the case 101 through the multiple first welding portions 109, so that a welding contact area between the current collector plate 106 and the case 101 is increased, and the connection stability between the current collector plate 106 and the case 101 is enhanced, thereby a relatively large torsion can be resisted. Meanwhile, a large welding area can meet fast charging and overcurrent requirements of the battery 100, thereby the performance of the battery 100 is improved. From the relationship between the distance and the torque, it can be seen that if the first welding portions 109 are arranged close to the edge of the current collector plate 106, the welding force applied to the first welding portions 109 will be decreased. A distance between each of the first welding portions 109 and the center of the current collector plate 106 is larger than a distance between the first welding portions 109 and the edge of the current collector plate 106, so that the welding force applied to the first welding portions 109 is reduced, thereby the welding difficulty is reduced, and the welding strength is increased. Meanwhile, the torsion resistance of the current collector plate 106 and the bottom 103 of the case 101 is increased, the detachment of the current collector plate 106 from the case 101 is avoided, and the safety coefficient of the battery 100 is increased.

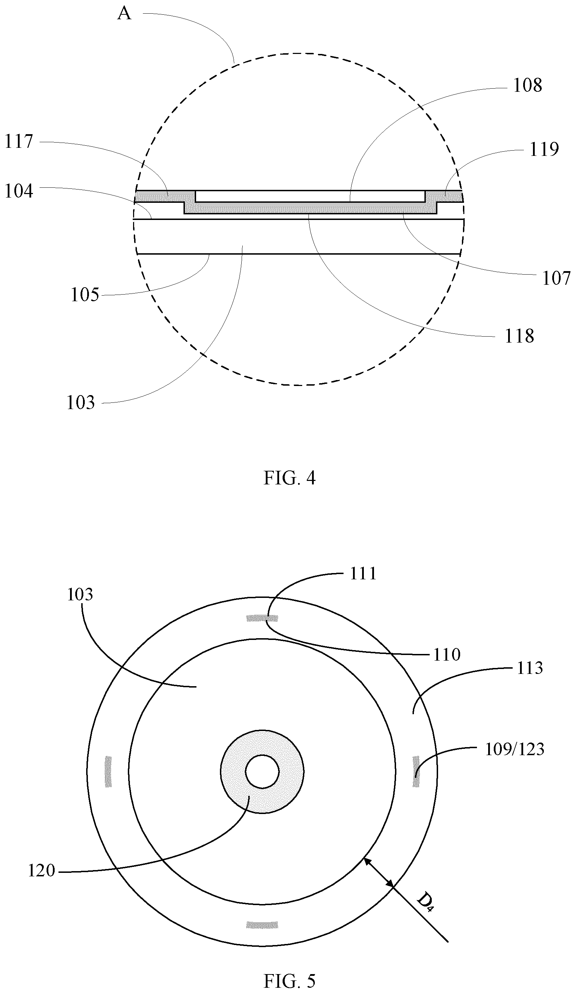

Specifically, in the present embodiment, referring to FIG. 4, the bottom 103 of the case 101 has two opposite side surfaces. For example, in a longitudinal direction of the battery 100, the two side surfaces of the bottom 103 of the case 101 are a first side surface 104 and a second side surface 105. The first side surface 104 is a side surface located inside the cavity 102. The second side surface 105 is arranged opposite to the first side surface 104, and the second side surface 105 is a side surface located outside the cavity 102. Similarly, the current collector plate 106 has two opposite side surfaces: a third side surface 107 and a fourth side surface 108. The third side surface 107 is a side surface facing the bottom 103 of the case 101, and the fourth side surface 108 is a side surface facing away from the bottom 103 of the case 101. Specifically, the multiple first welding portions 109 are formed on the third side surface 107.

It should be noted that, during use, the battery 100 may be displaced, such as rotated or shaken, and the like. During the rotation and shaking of the battery 100, the current collector plate 106 and the case 101 may be moved in opposite directions. Force couple is generated by the inertia of a core 122 inside the battery 100, so that the current collector plate 106 is detached from the bottom 103 of the case 101. Through testing, it is found that the distance (here it refers to the distance between the first welding portions 109 and the center of the current collector plate 106) is inversely proportional to the torque resistance. Therefore, the closer the first welding portions 109 are to the center of the current collector plate 106, the greater the force applied to the current collector plate 106 is. Specifically, in this embodiment, in order to avoid the detachment of the current collector plate 106 from the bottom 103 of the case 101, each of the first welding portions 109 includes a first side edge 110 close to the center of the current collector plate 106 and a second side edge 111 away from the center of the current collector plate 106. A radius of the current collector plate 106 is defined as D1, a shortest distance between the first side edge 110 and the center of the current collector plate 106 is defined as D2, the inertia force applied to the current collector plate 106 is defined as F1, the welding force applied to the first welding portions 109 is defined as F2, and the number of the first welding portions 109 is defined as n, where F1D1<nF2D2. Therefore, the rotation of the core 122 and the current collector plate 106 together during the rotation and shaking of the battery 100 can be avoided, so that the fracture of welding between the current collector plate 106 and the bottom 103 of the case 101 can be avoided, and the connection strength between the current collector plate 106 and the bottom 103 of the case 101 is improved.

It should be noted that, in case that the first welding portions 109 are in the shape of a circular arc, the shortest distance between the first side edge 110 and the center of the current collector plate 106 is the radius of the circular arc. In case that the first welding portions 109 are in the shape of a straight line, the shortest distance between the first side edge 110 and the center of the current collector plate 106 is the distance between a middle point of the first side edge and the center of the current collector plate 106.

Specifically, in the practical application, it is necessary to first determine the shortest distance (i.e., D2) from the first side edge 110 to the center of the current collector plate 106. The position of the first welding portions 109 can be determined based on D2. Then, the position of the second side edge 111 can be determined according to the width of the first welding portions 109. At last, the position of the first welding portions 109 can be determined. Specifically, in the present embodiment, the distance between the first side edge 110 and the center of the current collector plate 106 is D2, where 7.0mm≤D2≤9.4mm. More specifically, the distance between the first side edge 110 and the center of the current collector plate 106 can be 7.0mm, 7.2mm, 7.4mm, 7.6mm. 7.8mm, 8.0mm, 8.1mm, 8.2mm, 8.3mm, 8.4mm, 8.5mm, 8.61mm, 8.62mm, 8.64mm, 8.65mm, 8.68mm, 8.69mm, 8.7mm, 8.8mm, 8.85mm, 8.9mm, 9.0mm, 9.1mm, 9.2mm, 9.3mm, and 9.4mm. In some embodiments, the distance between the first side edge 110 and the second side edge 111 is D3, where 0.1mm≤D3≤0.3mm. More specifically, the distance between the first side edge 110 and the second side edge 111 may be 0.1mm, 0.12mm, 0.14mm, 0.15mm, 0.16mm, 0.18mm, 0.19mm, 0.2mm, 0.21mm, 0.22mm, 0.23mm, 0.24mm, 0.25mm, 0.26mm, 0.27mm, 0.28mm, 0.29mm, 0.30mm. In an embodiment, the distance between the first side edge 110 and the center of the current collector plate 106 is 8.7mm and the distance between the first side edge 110 and the second side edge 111 is 0.3mm.

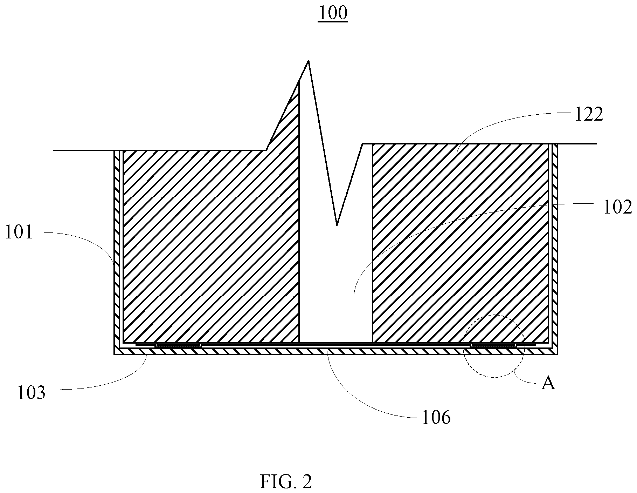

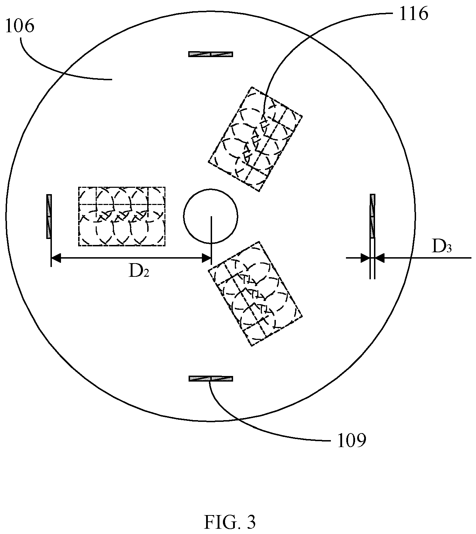

Referring to FIG. 2 and FIG. 3, in order to ensure the uniformity of the forces applied to the current collector plate 106 and the bottom 103 of the case 101, the distance between each two adjacent first welding portions 109 is equal. That is, the multiple first welding portions 109 are arranged at the same intervals so as to ensure the connection stability between the current collector plate 106 and the bottom 103 of the case 101. Torques are evenly distributed to avoid situations where torques are concentrated in one place, and excessive stress is applied at this place, resulting in a fracture.

It should be noted that, the specific shape of the first welding portions 109 is not limited thereto. Specifically, in this embodiment, the first welding portions 109 may be in the shape of a circular arc, a circular ring, a letter "C", or a spiral.

Referring to FIG. 1 and FIG. 3, the battery 100 further includes a core 122 and multiple second welding portions 116. In the present embodiment, tabs are arranged on the core 122. The current collector plate 106 is welded to tabs by the multiple second welding portions 116. Specifically, the multiple second welding portions 116 are formed on a side, facing away from the bottom 103, of the current collector plate 106 (the current collector plate 106 has a third side surface 107 and a fourth side surface 108, the fourth side surface 108 is the side surface of the current collector plate 106 facing away from the bottom, and the third side surface 107 is the side surface of the current collector plate 106 facing toward the bottom. Note that multiple first welding portions 109 are formed on the third side surface 107, and multiple second welding portions 116 are formed on the fourth side surface 108). The current collector plate 106 is welded to the tabs by the multiple second welding portions 116. The tabs are arranged on the core 122. That is, the current connector plate is welded to the core 122 by the multiple second welding portions 116. Specifically, in consideration of the connection stability, the multiple second welding portions 116 are arranged around the center of the current collector plate 106. The distance between each two adjacent second welding portions 116 is equal, and the multiple second welding portions 116 are arranged at the same intervals, so that the welding force between the current collector plate 106 and the tabs is uniformly distributed, thereby improving the connection stability of the current collector plate 106 and the tabs. More specifically, each of the second welding portions 116 is arranged in a staggered manner with each of the first welding portions 109. The staggered arrangement indicates that an orthographic projection of the first welding portions 109 on the current collector plate 106 does not overlap with that of the second welding portions 116 on the current collector plate 106. The first welding portions 109 and the second welding portions 116 are staggered to avoid the mutual interference, improve the stability of welding, and enhance the safety coefficient of the battery 100.

It should be noted that, the manners in which the first welding portions 109 and the second welding portions 116 are staggered are not limited thereto, as long as there is no interference between them. Specifically, in the present embodiment, referring to FIG. 2 and FIG. 4, the current collector plate 106 includes a first connection section 117 and a second connection section 119 arranged around the first connection section 117. The second connection section 119 is recessed toward the bottom 103 of the case 101 to form an annular boss 118. It should be noted that, the first connection section 117 and a second connection section 119 are integrally formed. In the actual processing, the current collector plate is placed on a punching machine to punch the second connection section 119, thereby forming the annular boss 118. In some embodiments, the annular boss 118 has a side surface close to the bottom 103 of the case 101, and multiple first welding portions 109 are formed under the annular boss 118 (here refer to the side surface of the annular boss 118 close to the bottom 103 of the case 101). The first connection section 117 has a side surface close to the core 122, and multiple second welding portions 116 are formed on the first connection section 117 (here refer to the side surface of the first connection section 117 close to the core 122). Specifically, in the present embodiment, the annular boss 118 is configured to divide the current collector plate 106 into various portions (i.e., the area of the annular boss 118 and the area of the second connection portion 119. The first welding portions 109 are arranged on the annular boss 118, and the second welding portions 116 are arranged on the second connection section 119. The current collector plate 106 is divided into various areas, and the first welding portions 109 and the second welding portions 116 are arranged on the various areas, so that the first welding portions 109 and the second welding portions 116 are staggered. Specifically, the height of the second welding portions 116 protruding from the current collector plate 106 is smaller than the height of the annular boss 118, ensuring that the annular boss 118 make good contact with the inner side surface of the case 101, and improving the connection stability between the bottom 103 of the case 101 and the current collector plate 106.

Specifically, in the present embodiment, the bottom 103 of the case 101 is configured to be an electrode, and thus the case 101 is charged. Take the safety of the battery 100 into consideration, the battery 100 further includes a housing 112, which is sleeved on the case 101 and wrapped with an insulating film. The purpose of setting the insulating film is that: on one hand, the housing 112 is wrapped on the outside of the case 101 to insulate the case 101 from the outside, thereby avoiding the case 101 from oxidation and corrosion; on the other hand, current from the housing 112 can be avoided from being transmitted to the outside, thereby improving the safety of the battery 100. Specifically, in the present embodiment, referring to FIG. 1 and FIG. 5, an end of the housing 112 close to the bottom 103 of the case 101 is folded inwardly toward the bottom 103 of the case 101 to form an extension portion 113. The extension portion 113 is located below the bottom 103 of the case 101 (here refer to the second side surface 105, that is, the extension portion 113 covers the second side surface 105). An orthographic projection of the extension portion 113 on the bottom 103 of the case 101 covers an orthographic projection of multiple first welding portions 109 on the bottom 103 of the case 101. The purpose of this arrangement is to ensure that the first welding portions 109 can be covered by the extension portion 113, so that the first welding portions 109 can be protected from oxidation and corrosion, and avoid the current collector plate 106 from being disconnected from the bottom 103 of the case 101. In an embodiment, the first welding portions 109 are located at the middle portion of the extension portion 113.

It should be noted that, the length of the extension portion 113 is related to the size and position of the first welding portions 109. It should be considered that the entire of the first welding portions 109 are be covered by the extension portion 113, so as to avoid exposing the welding spots on the first welding portions 109, and avoiding the extension portion 113being excessively long, which may affect the transmission of current to the bottom 103 of the case 101. Specifically, in the present embodiment, the length of the extension portion 113 is D4, where 2mm≤D4≤3mm. More specifically, the length of the extension portion 113 may be 2.1mm, 2.2mm, 2.3mm, 2.4mm, 2.5mm, 2.6mm, 2.7mm, 2.8mm, 2.9mm, or 3.0mm.

In another embodiment, the battery 100 further includes a protective layer arranged under the bottom 103 of the case 101 (here refer to under the second side surface 105, i.e., the second side surface 105 is covered by the protective layer). An orthographic projection of the protective layer on the bottom 103 of the case 101 covers an orthographic projection of multiple first welding portions 109 on the bottom 103 of the case 101. Specifically, the multiple first welding portions 109 are covered by the protective layer, so that the multiple first welding portions 109 are separated from the outside to avoid the first welding portions 109 from oxidation and corrosion.

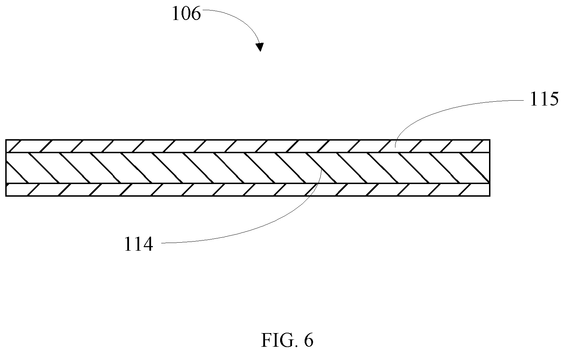

Referring to FIG. 6, the current collector plate 106 includes a body 114 and an outer layer 115 located outside the body 114. The body 114 is welded to the bottom 103 of the case 101 through the outer layer 115. The body 114 is made of copper, and the outer layer 115 is made of nickel. It should be noted that, in order to ensure the strength of the battery 100, the case 101 is generally made of steel, and the case 101 and the current collector plate 106 are connected by welding. For the purpose of reducing electrical resistance, copper is selected as the material of the current collector plate 106. However, copper has poor reflectivity to laser welding. Therefore, the welding process is complicated and difficult to proceed. Therefore, copper is selected as the material of the body 114, and nickel is selected as the material of the outer layer 115. The outer layer 115 is wrapped around the outside of the body 114. On one hand, the material of the outer layer 115 is nickel which can reduce the reflection of the laser welding. A layer of nickel is coated outside of the copper, so that the machinability of the copper can be improved, and it is easy for the current collector plate 106 to be welded to the case 101. On the other hand, the outer layer 115 is wrapped around outside of the body 114, so that the body 114 can be protected and avoided from exposure to air and oxidation and corrosion, thereby the service life of the current collector plate 106 is improved.

It should be noted that, in the actual process, not only the electrical resistance of the current collector plate 106 needs to be considered, but also the strength of the current collector plate 106 itself and the size of the occupied space need to be taken into consideration. In case that the current collector plate 106 is thin, then the connection strength is being weaken and the current collector plate 106 is easily broken. In case that the current collector plate 106 is thick, then the occupied space of the current collector plate 106 is increased, so that the size of the whole battery 100 is increased. The thickness of the body 114 is D5, and the thickness of the outer layer 115 is D6, where D5≥0.15mm and 0.3µm≤06≤3.5µm. Specifically, the thickness of the body 114 may be 0.15mm, 0.18mm, 0.2mm, 0.25mm, 0.3mm, 0.4mm, 0.45mm, 0.5mm, 0.55mm, 0.6mm, 0.65mm, 0.7mm, 0.75mm, 0.8mm. The thickness of the outer layer 115 may be 0.3µm, 0.4µm, 0.5µm, 0.6µm, 0.7µm, 0.8µm, 0.9µm, 1.0µm, 1.2µm, 1.4µm, 1.6µm, 1.8µm, 1.5µm, 2.0µm, 2.2µm, 2.4µm, 2.5µm, 2.6µm, 2.8µm, 2.9µm, 3.0µm, 3.1µm, 3.2µm, 3.3µm, 3.4µm, and 3.5µm, which can be selected according to actual conditions.

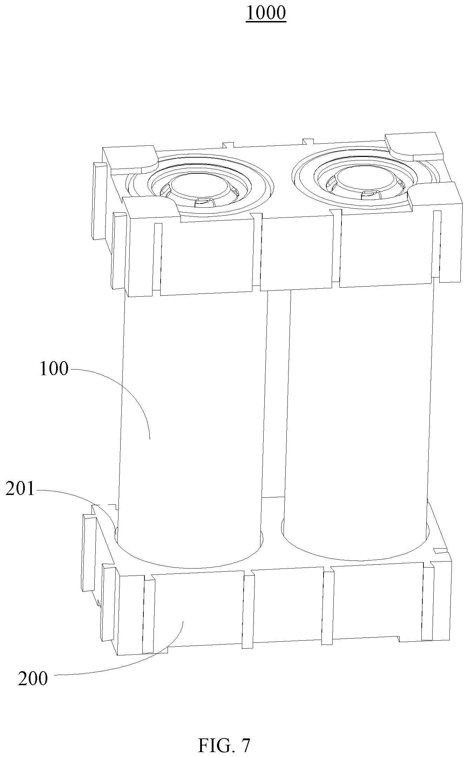

The embodiments of the present application further provide a battery module 1000. Referring to FIG. 7, the battery module 1000 includes multiple batteries 100 and a connection piece 200. The connection piece 200 is formed with multiple connection portions 201, and each of the connection portions 201 is connected to a corresponding battery 100.

Referring to FIG. 5 and FIG. 7, each battery 100 further includes a third welding portion 120 formed on a side, facing away from the current collector plate 106, of the bottom 103 of the case 101 (i.e., multiple third welding portions 120 are formed on the second side surface 105). The battery 100 is welded to the connection piece 200 through the third welding portion 120. It should be noted that, an orthographic projection of the third welding portion 120 on the bottom 103 of the case 101 does not overlap with the orthographic projection of the first welding portions 109 on the bottom 103 of the case 101. The purpose of this arrangement is to avoid mutual interference between the first welding portions 109 and the third welding portion 120, which may cause welding difficulties. In an embodiment, the third welding portion 120 is arranged at the center of the bottom 103 of the case 101.

More specifically, in an individual battery 100, the orthographic projection of multiple first welding portions 109, the orthographic projection of the multiple second welding portions 116, and the orthographic projection of the third welding portion 120 are staggered on the current collector plate 106. There is no interference between the first welding portions 109, the second welding portions 116, and the third welding portion 120, making welding easier, and the welding connection strength more stable.

It should be noted that, the annular boss 118 is formed on the current collector plate 106. In order to avoid interference of the case 101 with the annular boss 118, the bottom 103 of the case 101 is recessed in a direction away from the current collector plate 106 to form a solder accommodation portion 123. The solder accommodation portion 123 is configured for avoiding the annular boss 118, so that the solder accommodation portion 123 accommodate the multiple first welding portions 109.

An embodiment of the present application further provides a battery pack, including a box and a battery module 1000, wherein the battery module 1000 is arranged in the box.

## Claims

1. A battery, comprising:
a case (101) comprising a top and a bottom (103), a cavity (102) being formed in the case;
a current collector plate (106) arranged in the cavity (102); and
a plurality of first welding portions (109) formed on a side, close to the bottom (103), of the current collector plate (106),
**characterized in that** the current collector plate (106) is welded to the bottom (103) through the plurality of first welding portions (109), the plurality of first welding portions (109) are arranged around a center of the current collector plate (106), and a distance between each of the first welding portions (109) and a center of the current collector plate (106) is greater than a distance between the first welding portion (109) and an edge of the current collector plate (106).

2. The battery according to claim 1, wherein each of the first welding portions (109) includes a first side edge (110) close to the center of the current collector plate (106) and a second side edge (111) away from the center of the current collector plate (106), a radius of the current collector plate (106) is D1, a shortest distance between the first side edge (110) and the center of the current collector plate (106) is D2, an inertial force applied to the current collector plate (106) is F1, a welding force applied to the first welding portions (109) is F2, and a number of the first welding portions (109) is n, where F1D1<nF2D2.

3. The battery according to claim 2, wherein a distance between the first side edge (110) and the second side edge (111) is D3, where 7.0mm≤D2≤9.4mm, 0. 1mm≤D3≤0.3mm.

4. The battery according to any one of claims 1 to 3, wherein a distance between every two adjacent first welding portions (109) is equal; and/or,
the first welding portions (109) are each in a shape of a circular arc, a ring, a letter C, or a spiral.

5. The battery according to any one of claims 1 to 4, further comprising a housing (112) sleeved on the case (101),
wherein an end, close to the bottom (103), of the housing (112) is folded inwardly to form an extension portion (113), a portion of the bottom (103) is covered by the extension portion (113), and orthographic projections of the plurality of the first welding portions (109) on the bottom (103) of the case (101) are covered by an orthographic projection of the extension portion (113) on the bottom (103).

6. The battery according to claim 5, further comprising an insulating film sleeved on the housing.

7. The battery according to claim 5, wherein a length of the extension portion (113) is D4, where 2.55mm≤D4≤3.4mm.

8. The battery according to any one of claims 1 to 4, further comprising a protective layer arranged below the bottom (103) of the case (101), and orthographic projections of the plurality of the first welding portions (109) on the bottom (103) of the case (101) are covered by an orthographic projection of the protective layer on the bottom (103) of the case (101).

9. The battery according to any one of claims 1 to 4, wherein the current collector plate (106) comprises a body (114) and an outer layer (115) located outside the body (114), the body (114) is welded to the bottom (103) of the case (101) through the outer layer (115), the body (114) is made of a material including copper, and the outer layer (115) is made of a material including nickel; and wherein the body (114) has a thickness of D5 and the outer layer (115) has a thickness of D6, where D5≥0.15mm, 0.3µm≤D6≤3.5µm.

10. The battery according to any one of claims 1 to 4, further comprising a core (122) and a plurality of second welding portions (116) formed on a side, away from the bottom (103) of the case (101), of the current collector plate (106), wherein the current collector plate (106) is welded to the core (122) through the plurality of second welding portions (116), the plurality of second welding portions (116) are arranged around the center of the current collector plate (106), each of the plurality of second welding portions (116) and each of the plurality of first welding portions (109) are arranged in a staggered manner; and wherein a distance between every adjacent two second welding portions is equal.

11. The battery according to any one of claims 1 to 4, wherein the current collector plate (106) comprises a first connection section (117) and a second connection section (119) arranged around the first connection section (117), the second connection section (119) is recessed in a direction towards the bottom (103) of the case (101) to form an annular boss (118), the plurality of first welding portions (109) are all formed below the annular boss (118), and the plurality of second welding portions (116) are formed on the first connection section (117).

12. The battery according to any one of claims 1 to 4, wherein the bottom (103) of the case (101) is recessed in a direction away from the current collector plate (106) to form a solder accommodation portion (123) for accommodating the plurality of first welding portions (109).

13. A battery module, comprising:
a plurality of batteries, each of the batteries is a battery according to any one of claims 1 to 12; and
a connection piece (200), a plurality of connection portions (201) being formed on the connecting piece, each of the connection portions is connected to a corresponding one of the batteries.

14. The battery module according to claim 13, wherein each of the batteries further comprises a third welding portion (120) formed on a side, away from the current collector plate (106), of the bottom (103), wherein the batteries are welded to the connection piece (200) through the third welding portion (120).

15. The battery module of claim 14, wherein each of the batteries further comprise a plurality of second welding portions (116);
in a same one of the batteries, orthographic projections of the plurality of first welding portions (109) on the current collector plate (106), orthographic projections of the plurality of second welding portions (116) on the current collector plate (106), and orthographic projections of the third welding portion (120) on the current collector plate (106) are arranged in a staggered manner.
